# EUROPEAN PATENT APPLICATION

(11) **EP 1 036 629 A2**
(43) Date of publication of application: **20.09.2000**
(21) Application number: 99110001.7
(22) Date of filing: 21.05.1999
(51) Int. Cl.: B23Q 3/06, B23Q 11/00, B23Q 3/10, B23Q 15/007, B23Q 1/76

(54) **A machine for working bars**

(30) Priority: 11.03.1999 IT MI990492
(71) Applicant: I.M.C. S.r.l., 37040 S.Stefano di Zimella (VR) (IT)
(72) Inventor: Vicentini, Marco, 37047 S.Bonifacio (VR) (IT)
(74) Representative: Robba, Pierpaolo

(57) **Abstract**

A machine for working metal or plastic sections, comprising a bed (1), a stand (3) supported on said bed (1) and movable through guides (4) along a first direction (X); a spindle assembly (5) supported by a plate (7) that in turn is slidable along an axis (Y) perpendicular to the former through a guide (6). The bed (1) is provided with at least one additional clamp (12) for gripping the section, such clamp being movable along the longitudinal axis (X) of the bed during the working of the section.

## Description

The present invention relates to a machine for working elongated members such as metal sections or extruded pieces such as strips, beams or bars either of metal or plastic material, and particularly of non-ferrous metals such as aluminium, and light alloys and steel

In the present description, the term metal or plastic sections means elongated structural components having a constant cross section, made of a plastic material or of metal.

More particularly the machine of the invention is of the type also known as 4-axes machining centre adapted to carry out both milling and drilling, and is employed for machining metal or plastic structural members e.g. for being assembled into window frames.

The known machines used to accomplish this type of working comprise a support or bed having a length corresponding to the length of the section to be machined and provided with a plurality of clamping devices or clamps distributed along the machine length for retaining the workpiece or section during the machining thereof. Such machines are further provided with a post, e.g. of the gate type, supporting an (electrical) spindle equipped with a tool magazine for carrying out machining processes such as drilling, milling, cutting, tapping, etc. on three sides of the section.

The bed length in the known machines is about equal to the maximum length of the workpieces or sections to be machined so that the longitudinal size of such machines is rather large.

The machines presently used for this type of machining are rather working centres adapted to carry out several machining processes, but such machines are out of proportion when operating on plastic or metal sections requiring only a reduced numbers of relatively simple working operations such as milling and drilling.

Moreover, the known machines often generate noise and vibrations when the working area of the section is far from the clamps retaining the workpiece, and such drawback is not eliminated by providing large numbers of clamps that can slide to be positioned at different locations along the machine bed.

Namely, in the known machines the clamps are moved either manually or by shifting the running stand, but they remain stationary during the machining processes and such machines generate annoying noise and vibrations when machining a workpiece portion far from a clamp.

Finally, in the known machines, the pivoting movements of the spindle about the workpiece are accomplished by means of an electric motor with an arrangement that is relatively expensive.

It is an object of the present invention to overcome the above illustrated drawbacks of the prior art, and more particularly to provide a machine for working bars, sections and more generally elongated structural members, that has a reduced longitudinal cumber, and is relatively noiseless.

A further object of the invention is to reduce the cost of this type of machines by using a pneumatic actuator for laterally positioning the spindle around the section.

These objects are achieved through a machine according to claim 1. Further advantageous characteristics are recited by the dependent claims.

The invention will now be disclosed with reference to the attached drawings, illustrating preferred but nonlimiting embodiments thereof, in which:
Fig. 1 is a side view of a machine according to the invention;
Fig. 2 is a front view of the machine of Fig. 1;
Figs. 3 and 4 are a (partially cross-sectioned) side view and a front view respectively, of a spindle according to another embodiment of the invention.

With reference to the Figures, the machine of the invention comprises a bed 1 supporting a running stand 3 movable in both directions along the longitudinal axis of the machine (first direction) indicated by X, through guides 4. The bed 1 rests over or is secured to the floor through supporting members or feet 2. A control unit 10, of the NC type, is positioned near the machine and is programmed (or can be programmed) to automatically and properly operate all the actuators of the machine. In the Figures, for simplicity sake, the protective covers of the parts have been omitted. Moreover a tool magazine and means for replacing the tools are associated with the spindle and these components too have been omitted in the drawings for sake of simplicity.

A plate 7 is slidably mounted to the running stand 3 through guides 6 allowing the displacement of said plate along an axis (or direction) Y that is perpendicular to the above mentioned axis. This plate 7 carries four shoes that in turn support an electrical spindle assembly 5, movable along a vertical axis Z that is perpendicular to both the preceding axes.

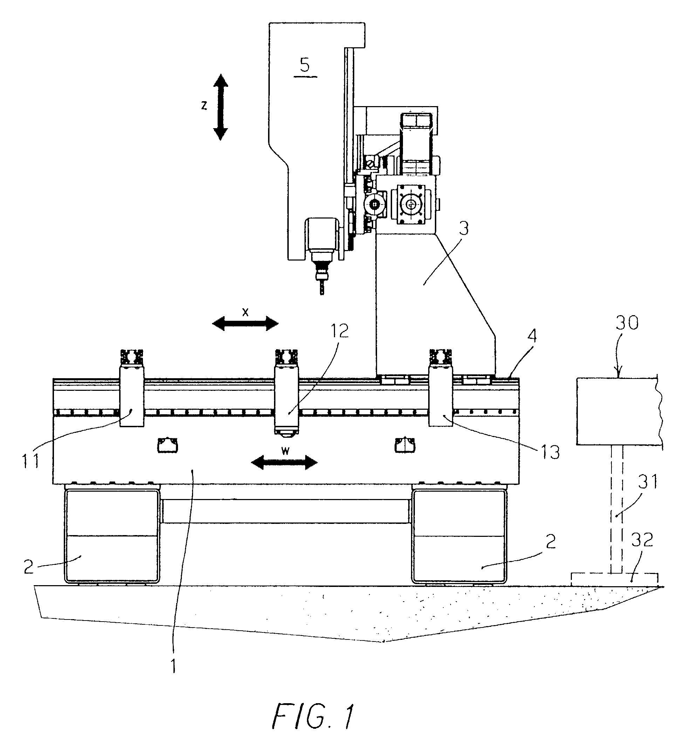

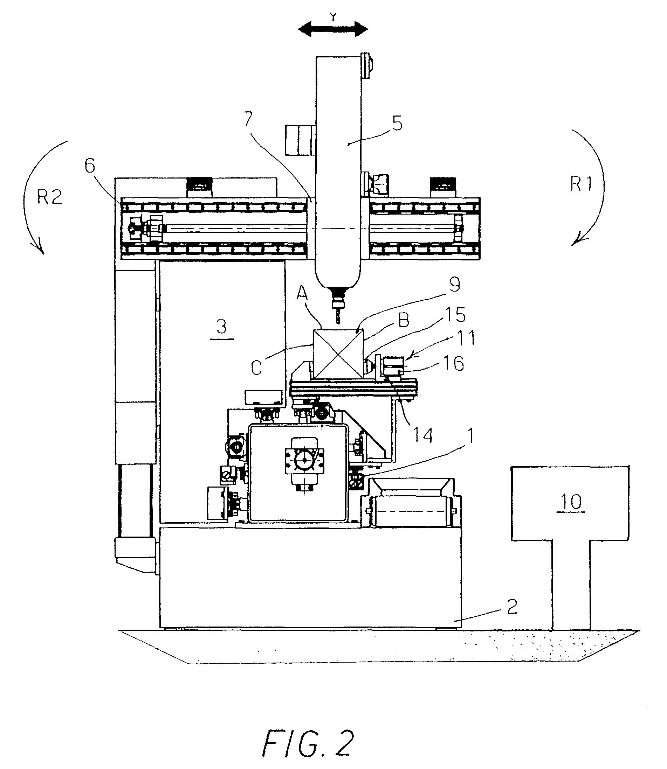

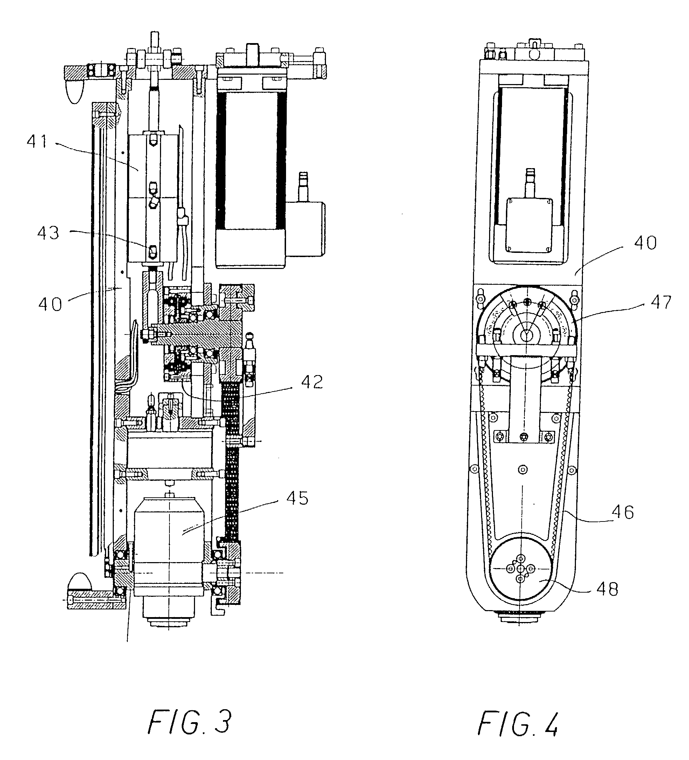

In the situation shown in Figures 1 and 2, the spindle is positioned for machining the surface A of the section. The spindle can be pivoted by 90° in both directions, as shown by arrows R1 and R2, for machining the side surfaces B and C of the section. To this aim a conventional device can be used comprising an electric motor. Alternatively, in accordance with an embodiment of the invention, a pneumatic actuator is used, as will be disclosed with more details hereinafter with reference to Figures 3 and 4.

The bed 1 is provided with a number of clamps for securing the workpiece or section 9, each clamp comprising a frame 14 carrying pressing members 15 and actuators 16, for example pneumatic actuators. In the illustrated embodiment there are provided three clamps 11, 12 and 13.

The clamps 11, 13 are mounted at fixed locations of the machine, and can be manually displaced along the bed 1, whereas the clamp 12 is movable under control of the machine NC unit along the bed during the workpiece machining process.

More precisely, according the embodiment of the invention illustrated in Figures 1 and 2, the central clamp 12 can be moved substantially along the whole length of the machine and be stopped at any desired location thereon, in the direction of W axis shown in Fig. 1. The displacements of the clamp 12, as well as its blocking and unblocking, are controlled by device 10, through a ball bearing screw and a motor.

When a plastic or metal section considerably longer than the bed has to be machined, an additional stand 30 can be used for supporting the projecting section, such stand comprising legs 31 and resting feet 32 and being aligned with the bed and possibly secured to this latter. Although a stand is not essential to the invention since the portion to be machined is however clamped and firmly retained by the clamps 11, 12 and 13, nevertheless such auxiliary device (partially shown with dashed lines in Fig. 1) allows for a better support of the section.
case the machine operates with a configuration of a sawing machine for compound cuts.

Besides, although having a radial structure, the machine of the invention can perform the cuts of a tangential sawing machine.

Finally, by using a device for manipulating the sections, the machine can be used in lieu of a double sawing machine, both normal and for compound cuts.

Although the invention has been illustrated with reference to a preferred embodiment, nevertheless this is not to be construed as a limitation since the scope of the invention includes several modifications and changes that will result evident to the skilled of the art.

## Claims

1. A machine for working elongated members such as metal or plastic sections comprising:
a bed (1) provided of a plurality of clamps (11, 13) for gripping a section (9) to be machined;
a running stand (3) supported on said bed (1);
a spindle assembly (5) movable along a first direction (X) on first guides (4) and along a second direction (Y) perpendicular to the former on second guide (6);
means (10) for controlling the operation of said machine;
characterized in that said bed (1) is provided with at least one additional clamp (12) adapted to grip said section and movable along said longitudinal direction (X) of said bed (1), said control means (10) further controlling the blocking and the unblocking, as well as the displacement of said at least one clamp (12) during the operation of the machine.

2. A machine according to claim 1, characterized in that said bed (1) is provided with at least two fixed clamps (11, 13).

3. A machine according to claim 1 or 2, characterized in that each of said movable clamps (12) comprises a frame (14) carrying pressing members (15) and pneumatic actuators (16) for opening and closing said pressing members (15).

4. A machine according to the preceding claims, characterized in that it comprises an elongated member (30), longitudinally positionable in said machine for supporting the portion of said section (if any) exceeding the length of the machine.

5. A machine according to the preceding claims, characterized in that said spindle assembly (5) is carried by a plate (7) that in turn is slidable on a stand (3) supported by said bed (1)

6. A machine according to the preceding claims, characterized in that said at least one additional clamp (12) is movable over the whole length of the machine and can be secured to it under control of a computer.

7. A machine according to the preceding claims characterized in that said spindle (45) is mounted on a pivot arm (40) under control of a pneumatic cylinder (41) for pivoting said spindle by 90° in both directions to machine the lateral surfaces (B, C) of said section (9).

8. A machine according to claim 7, characterized in that it comprises position sensors (43) and a disc brake (42).

9. A machine according to claim 7, characterized in that it provides a belt (46) movable between two pulleys (47, 48) for transmitting the operating motion to said spindle.
